(19) Europäisches Patentamt / European Patent Office / Office européen des brevets

(11) **EP 3 309 535 A1**

(12) # DEMANDE DE BREVET EUROPEEN

(43) Date de publication:
**18.04.2018 Bulletin 2018/16**

(51) Int Cl.:
***G01N 11/08*** (2006.01)   ***B01L 3/00*** (2006.01)

(21) Numéro de dépôt: **17195615.4**

(22) Date de dépôt: **10.10.2017**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **11.10.2016 FR 1659828**

(71) Demandeur: **COMMISSARIAT À L'ÉNERGIE ATOMIQUE ET AUX ÉNERGIES ALTERNATIVES 75015 Paris (FR)**

(72) Inventeurs:
• **AUTHESSERRE, Claire 38000 GRENOBLE (FR)**
• **BOTTAUSCI, Frédéric 83370 SAINT AYGULF (FR)**
• **RIVERA, Florence 38800 CHAMPAGNIER (FR)**

(74) Mandataire: **GIE Innovation Competence Group 310, avenue Berthelot 69372 Lyon Cedex 08 (FR)**

(54) **PROCÉDÉ ET SYSTÈME POUR CARACTÉRISER UN FLUIDE**

(57) L'invention concerne un procédé pour caractériser un fluide, mis en oeuvre dans un système de traitement (UC) et à l'aide d'une architecture de mesure. L'architecture de mesure comporte un dispositif microfluidique du type à génération de gouttes d'une phase dispersée dans une phase continue, qui comporte un canal de phase dispersée destiné à recevoir un échantillon du fluide à caractériser formant la phase dispersée et un canal de phase continue destiné à recevoir un fluide formant la phase continue et débouchant dans le canal de phase dispersée en un point de jonction. Le procédé consiste à déterminer la viscosité dynamique ($\eta_d$) de la phase dispersée à partir de la variation de pression de la phase dispersée entre la pression à l'entrée du canal de phase dispersée et la pression (Pmffd) au point de jonction déterminée à partir d'un modèle et du débit de phase dispersée.

*Fig. 1A*

EP 3 309 535 A1

**Description**

**Domaine technique de l'invention**

La présente invention se rapporte à un procédé et un système pour caractériser un fluide. L'invention concerne également un rhéomètre microfluidique qui comporte notamment ledit système pour caractériser un fluide.

**Etat de la technique**

De manière connue, un rhéomètre est un appareil de laboratoire destiné à faire des mesures relatives à la rhéologie d'un fluide en appliquant une contrainte de cisaillement à un échantillon de ce fluide. Il permet notamment de déterminer les propriétés d'écoulement d'un fluide, notamment sa viscosité dynamique.

La mesure de la viscosité dynamique d'un fluide Newtonien ou non-Newtonien est souvent réalisée en employant un rhéomètre dit cône-plan ou plan-plan. Dans un rhéomètre cône-plan, l'échantillon de fluide à caractériser est placé entre le plan et le cône. En entraînant le cône à une vitesse donnée, l'échantillon de fluide subit un cisaillement qui dépend de la vitesse de rotation du cône. En mesurant le couple mécanique qui est exercé sur le cône pour le faire tourner, le rhéomètre en déduit la viscosité dynamique de l'échantillon de fluide.

Ce rhéomètre connu, pourtant très précis, présente cependant certaines limitations :

- Il est surtout adapté pour caractériser des échantillons de plus de 1ml ;
- A fort cisaillement, c'est-à-dire à vitesse de rotation élevée, le fluide peut être éjecté du dispositif.

Pour pouvoir caractériser des échantillons en plus faible quantité, il a été proposé d'employer des rhéomètres microfluidiques. C'est le cas par exemple dans le brevet US 7,290,441 B2 qui décrit un rhéomètre microfluidique comportant une brique ou puce microfluidique dans laquelle est réalisé un canal présentant une entrée et une sortie. Des capteurs de pression sont espacés d'une distance connue dans des cavités le long du canal. L'échantillon de fluide est injecté dans le canal par son entrée avec un débit contrôlé et la pression du fluide est mesurée le long du canal par les différents capteurs de pression, permettant ensuite d'en déduire la viscosité dynamique du fluide en fonction du taux de cisaillement appliqué le long du canal.

Cette solution présente cependant certains inconvénients, liés notamment à l'emploi de capteurs de pression. Ceux-ci sont coûteux, nécessitent un calibrage et ne sont adaptés que pour mesurer des pressions sur une gamme limitée.

D'autres solutions microfluidiques ont également été décrites dans les publications suivantes :

- Guillot et al. 2006 - "Viscosimeter on a microfluidic chip" ;
- Degré et al. 2006 - "Rheology of complex fluids by particle image velocimetry in microchannels".

Dans la publication citée ci-dessus et intitulée *"Viscosimeter on a microfluidic chip",* le rhéomètre utilise un dispositif microfluidique à jonction en T à deux entrées, une entrée pour le fluide à caractériser et une autre entrée pour un fluide de référence dont la viscosité est connue. En mesurant la position de l'interface entre les deux fluides au point de jonction et en connaissant les débits et la viscosité du fluide de référence, le rhéomètre détermine la variation de pression le long du canal. Cette solution présente cependant les inconvénients suivants :

- Elle nécessite d'employer un fluide de référence dont on connaît les caractéristiques et notamment la viscosité ;
- Pour obtenir un résultat précis, la solution proposée nécessite d'employer deux fluides qui présentent un faible rapport de viscosité (or la viscosité de l'un des fluides n'est pas connue) et d'appliquer un fort rapport de débits entre les deux entrées.

Par ailleurs la publication intitulée *"Development of a Simple Droplet-Based Microfluidic Capillary Viscometer for Low Viscosity Newtonian Fluids"* - *Michael F. Delamarre et Al* décrit une méthode de détermination de la viscosité dynamique d'un fluide. La méthode utilise notamment une jonction en T et se base sur une étape de calibration pour générer des courbes exprimant la viscosité en fonction d'un coefficient $\alpha$ déterminé par le rapport entre $h_{oil}$ et $h_{aq}$ qui correspondent à la taille des gouttes formées à la sortie de la jonction en T.

Cette publication décrit que la viscosité suit une relation linéaire. Ainsi, en mesurant expérimentalement $h_{oil}$ et $h_{aq}$ pour déterminer le coefficient $\alpha$ il est ainsi possible d'en déduire directement la viscosité. Le document précise que $h_{oil}$ et $h_{aq}$ sont déterminés expérimentalement en utilisant un microscope capturant des images :

La solution décrite dans ce document est prévue pour s'affranchir des mesures ou des estimations de pression du fluide dans le rhéomètre. Par ailleurs, elle n'est pas forcément directement adaptée à la caractérisation d'un fluide Non-newtonien.

La solution de l'invention n'a pas ce but et propose un rhéomètre microfluidique permettant de caractériser un fluide, qu'il soit Newtonien ou non Newtonien, de manière précise, en tenant compte des pressions à l'intérieur du rhéomètre. Le rhéomètre microfluidique de l'invention s'affranchit cependant de l'usage de capteurs de pression ce qui le rend facile à mettre en oeuvre et peu coûteux.

Un autre but de l'invention est également de proposer le procédé mis en oeuvre dans une unité de traitement pour caractériser le fluide ainsi que le système de traitement qui permet cette caractérisation. Ce système est associé à une architecture de mesure de manière à former ledit rhéomètre microfluidique.

## Exposé de l'invention

Ce but est atteint par un procédé pour caractériser un fluide, mis en oeuvre dans un système de traitement destiné à être associé à une architecture de mesure, ladite architecture de mesure comportant notamment :

- Un dispositif microfluidique du type à génération de gouttes d'une phase dispersée dans une phase continue, qui comporte un canal de phase dispersée destiné à recevoir un échantillon du fluide à caractériser formant la phase dispersée et un canal de phase continue destiné à recevoir un fluide formant la phase continue et débouchant dans le canal de phase dispersée en un point de jonction au niveau duquel sont formés lesdites gouttes,

Ledit procédé comportant des étapes de :

- Détermination de la pression de la phase dispersée au point de jonction à partir d'un modèle analytique, dans lequel la pression de la phase dispersée au point de jonction est fonction de la pression à laquelle la phase continue est injectée en entrée du canal de phase continue et d'un coefficient tenant compte de résistances hydrauliques du dispositif microfluidique,
- Détermination du débit de phase dispersée dans le canal de phase dispersée par mesure de la fréquence de génération des gouttes de phase dispersée et du volume des gouttes de phase dispersée,
- Détermination de la viscosité dynamique de la phase dispersée à partir de la variation de pression de la phase dispersée entre la pression à l'entrée du canal de phase dispersée et la pression au point de jonction déterminée à partir dudit modèle analytique et du débit de phase dispersée dans le canal de phase dispersée.

Selon une particularité, la pression au point de jonction est déterminée par la relation suivante :

$$P_{mffd} = \frac{2R_{av}P_c}{R_c + 2R_{av}}$$

Dans laquelle :

- Pmffd correspond à la pression audit point de jonction ;
- Rav correspond à la résistance hydraulique du canal situé en aval du point de jonction ;
- Rc correspond à la résistance hydraulique du canal de phase continue ;
- Pc correspond à la pression à laquelle la phase continue est injectée dans le canal de phase continue.

Selon une autre particularité, pour un fluide à caractériser de type Newtonien, la viscosité dynamique est déterminée à partir de la relation suivante :

$$\eta_d = \frac{P_d - P_{mffd}}{K * f * V}$$

Dans laquelle :

- Pmffd correspond à la pression audit point de jonction ;
- Pd correspond à la pression à laquelle la phase dispersée est injectée dans le canal de phase dispersée ;
- f et V correspondent respectivement à la fréquence et au volume des gouttes de phase dispersée dans le canal de phase dispersée ;

- K correspond à un coefficient tenant compte des paramètres géométriques du canal de phase dispersée.

Selon une autre particularité, pour un fluide à caractériser de type non-Newtonien, il comporte des étapes de :

- Détermination de la contrainte de cisaillement à partir de la variation de pression de la phase dispersée entre la pression à l'entrée du canal de phase dispersée et la pression au point de jonction déterminée à partir dudit modèle analytique,
- Détermination du taux de cisaillement apparent aux parois internes du canal de phase dispersée pour chaque valeur de débit de phase dispersée, ledit débit étant déterminé à partir de la fréquence et du volume des gouttes de phase dispersée,
- Détermination du taux de cisaillement réel à partir de ladite contrainte de cisaillement et dudit taux de cisaillement apparent, et en ce que la viscosité dynamique est déterminée à partir dudit taux de cisaillement réel et de ladite contrainte de cisaillement.

L'invention concerne également un système pour caractériser un fluide, destiné à être associé à une architecture de mesure, ladite architecture de mesure comportant notamment :

- Un dispositif microfluidique du type à génération de gouttes d'une phase dispersée dans une phase continue, qui comporte un canal de phase dispersée destiné à recevoir un échantillon du fluide à caractériser formant la phase dispersée et un canal de phase continue destiné à recevoir un fluide formant la phase continue et débouchant dans le canal de phase dispersée en un point de jonction au niveau duquel sont formés lesdites gouttes,

Ledit système comportant :

- Un module de détermination de la pression de la phase dispersée au point de jonction à partir d'un modèle analytique, dans lequel la pression de la phase dispersée au point de jonction est fonction de la pression à laquelle la phase continue est injectée en entrée du canal de phase continue et d'un coefficient tenant compte de résistances hydrauliques du dispositif,
- Un module de détermination du débit de phase dispersée dans le canal de phase dispersée par mesure de la fréquence de génération des gouttes de phase dispersée et du volume des gouttes de phase dispersée,
- Un module de détermination de la viscosité dynamique de la phase dispersée à partir des valeurs de la fréquence et du volume des gouttes de phase dispersée déterminées et de la variation de pression de la phase dispersée entre la pression à l'entrée du canal principal et la pression au point de jonction déterminée à partir dudit modèle analytique.

Selon une particularité du système, la pression au point de jonction est déterminée par la relation suivante :

$$P_{mffd} = \frac{2R_{av}P_c}{R_c + 2R_{av}}$$

Dans laquelle :

- Pmffd correspond à la pression audit point de jonction ;
- Rav correspond à la résistance hydraulique du canal situé en aval du point de jonction ;
- Rc correspond à la résistance hydraulique du canal de phase continue ;
- Pc correspond à la pression à laquelle la phase continue est injectée dans le canal de phase continue.

Selon une autre particularité du système, pour un fluide à caractériser de type Newtonien, le module de détermination de la viscosité dynamique comporte un module dédié recevant en entrée ladite pression déterminée au point de jonction, ladite viscosité dynamique étant déterminée par ce module dédié à partir de la relation suivante :

$$\eta_d = \frac{P_d - P_{mffd}}{K * f * V}$$

Dans laquelle :

- Pmffd correspond à la pression audit point de jonction ;
- Pd correspond à la pression à laquelle la phase dispersée est injectée dans le canal de phase dispersée ;
- f et V correspondent respectivement à la fréquence et au volume des gouttes de phase dispersée dans le canal de phase dispersée ;
- K correspond à un coefficient tenant compte des paramètres géométriques du canal de phase dispersée.

Selon une autre particularité du système, pour un fluide à caractériser de type non-Newtonien, le module de détermination de la viscosité dynamique comporte :

- Un module de détermination de la contrainte de cisaillement à partir de la variation de pression de la phase dispersée entre la pression à l'entrée du canal de phase dispersée et la pression au point de jonction déterminée à partir dudit modèle analytique,
- Un module de détermination du taux de cisaillement apparent aux parois internes du canal de phase dispersée pour chaque valeur de débit de phase dispersée, ledit débit étant déterminé à partir de la fréquence et du volume des gouttes de phase dispersée,

- Un module de détermination du taux de cisaillement réel à partir de ladite contrainte de cisaillement et dudit taux de cisaillement apparent,
- Un module de détermination de la viscosité dynamique à partir dudit taux de cisaillement réel et de ladite contrainte de cisaillement.

L'invention concerne également un rhéomètre microfluidique, qui comporte :

- Une architecture de mesure comportant :

    ◦ Un dispositif microfluidique du type à génération de gouttes d'une phase dispersée dans une phase continue, qui comporte un canal de phase dispersée destiné à recevoir un échantillon du fluide à caractériser formant la phase dispersée et un canal de phase continue destiné à recevoir un fluide formant la phase continue et débouchant dans le canal de phase dispersée en un point de jonction au niveau duquel sont formés lesdites gouttes,
    ◦ Un premier dispositif d'injection de la phase dispersée dans le canal de phase dispersée, comprenant des moyens de contrôle en pression de la phase dispersée à injecter dans ledit canal,
    ◦ Un deuxième dispositif d'injection de la phase continue dans le canal de phase continue, comprenant des moyens de contrôle en pression ou en débit de la phase continue à injecter dans le canal de phases continue,
    ◦ Un dispositif de mesure de la fréquence et du volume des gouttes de phase dispersée dans le canal de phase dispersée,

- Un système de traitement pour caractériser un fluide tel que défini ci-dessus.

Selon une particularité du rhéomètre, le dispositif microfluiduique comporte une puce microfluidique comprenant un canal principal formant au moins en partie le canal de phase dispersée et au moins un canal secondaire formant au moins en partie le canal de phase continue.

Selon une autre particularité du rhéomètre, le dispositif de mesure comporte une caméra agencée pour acquérir des images des gouttes de phase dispersée dans la phase continue.

L'invention a trait également à un procédé de caractérisation d'un fluide à l'aide d'un rhéomètre microfluidique tel que défini ci-dessus, ce procédé comportant les étapes suivantes :

- Injection de la phase dispersée dans le canal de phase dispersée à l'aide du premier dispositif d'injection à une pression déterminée,
- Injection de la phase continue dans le canal de phase continue à l'aide du deuxième dispositif d'injection à une pression ou à un débit déterminé de manière à former des gouttes de phase dispersée au point de jonction des deux canaux du dispositif,
- Mesure de la fréquence et du volume des gouttes de phase dispersée en aval du point de jonction,
- Détermination de la viscosité dynamique de la phase dispersée par la mise en oeuvre du procédé de caractérisation d'un fluide défini ci-dessus.

## Brève description des figures

D'autres caractéristiques et avantages vont apparaître dans la description détaillée qui suit faite en regard des dessins annexés dans lesquels :

- La figure 1A représente de manière schématique le rhéomètre microfluidique de l'invention.
- La figure 1B illustre de manière simplifiée la formation d'une goutte dans la puce microfluidique du rhéomètre de l'invention. Sur cette figure 1B, la puce microfluidique est grossie pour mieux comprendre le principe de formation des gouttes.
- Les figures 2 et 3 représentent les diagrammes fonctionnels illustrant de manière schématique le procédé de caractérisation d'un fluide, respectivement Newtonien et non Newtonien, mis en oeuvre dans le système de traitement de l'invention.
- La figure 4 représente des courbes de variation du débit de la phase dispersée en fonction de la variation de pression, pour du Ficoll à différentes concentrations. Ces courbes illustrent le principe de détermination de la viscosité dynamique de la phase dispersée, pour le cas d'un fluide Newtonien.
- La figure 5 représente des courbes de variation du taux de cisaillement apparent en fonction de la contrainte de cisaillement aux parois, pour un fluide non-Newtonien d'Alginate à plusieurs concentrations.

## Description détaillée d'au moins un mode de réalisation

L'invention concerne de manière générale un rhéomètre microfluidique. On verra que celui-ci est adapté pour caractériser un fluide Newtonien ou non-Newtonien.

Pour rappel, un fluide Newtonien est un fluide pour lequel la loi contrainte-vitesse de déformation est linéaire. La constante de proportionnalité entre ces deux paramètres représente sa viscosité.

Dans la suite de la description, les termes "amont" et "aval" employés sont à comprendre en tenant compte du sens d'injection des fluides dans le dispositif microfluidique.

Le rhéomètre microfluidique de l'invention est notamment parfaitement adapté pour caractériser un fluide, même si celui-ci est en faible quantité (échantillon inférieur à <500 $\mu$L).

Il peut être employé pour différentes applications, notamment biomédicales :

- Pour la caractérisation de fluides biopolymères,
- Pour caractériser la stabilité de solutions de protéines,
- Pour caractériser des échantillons de sang.

Il peut être également employé dans d'autres domaines :

- Pour caractériser des huiles et lubrifiants,

- Pour caractériser les solvants employés dans la fabrication de batteries rechargeables.

Bien entendu, cette liste d'applications n'est pas limitée et d'autres applications pourront être envisagées.

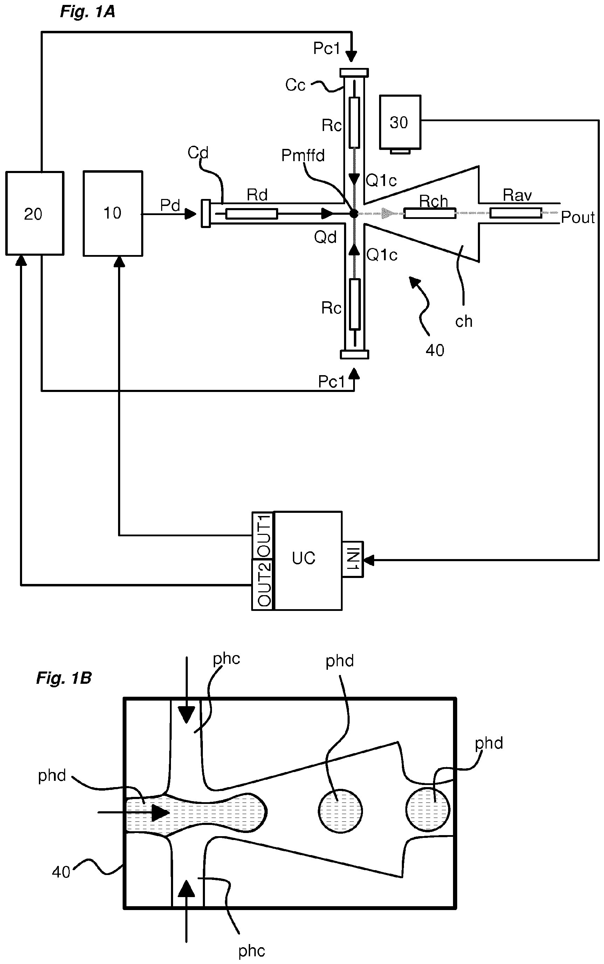

En référence à la figure 1A, le rhéomètre microfluidique de l'invention se compose de deux parties principales, une première partie qui constitue une architecture de mesure et une deuxième partie qui est formée d'un système de traitement chargé de traiter des données acquises par mesure ou comme variables d'entrée pour caractériser le fluide. Ces deux parties sont détaillées ci-dessous.

L'architecture de mesure comporte notamment un dispositif microfluidique. Ce dispositif microfluidique comporte une puce microfluidique 40, brique microfluidique ou carte microfluidique. Il constitue l'endroit où le fluide à caractériser est injecté. Cette puce 40 est à génération de gouttes de type MFFD (pour "*Microfluidic Flow Focusing Device*"). Dans la puce microfluidique 40, une phase appelée phase dispersée phd s'écoule dans un canal principal et une phase non miscible, appelée phase continue phc, est injectée dans un canal secondaire débouchant dans ledit canal principal. La phase continue cisaille la phase dispersée, entraînant la formation de gouttes de phase dispersée en flux de phase continue. La figure 1B illustre le principe de formation des gouttes de phase dispersée dans la puce par cisaillement de la phase dispersée injectée en entrée. La puce microfluidique est par exemple réalisée dans un matériau transparent de type Polydiméthylsiloxane (PDMS). D'autres matériaux pourraient bien entendu être envisagées.

La puce microfluidique 40 comporte ainsi un canal principal doté d'une entrée et d'une sortie et au moins un canal secondaire présentant une entrée et une sortie débouchant dans le canal principal en un point de jonction.

De manière avantageuse, la puce 40 comporte deux canaux secondaires par lesquels la phase continue est injectée et débouchant tous deux au même point de jonction. De manière non limitative, l'invention sera décrite pour une puce qui comporte ainsi deux canaux secondaires débouchant tous deux perpendiculairement dans le canal principal au point de jonction, comme cela est représenté sur la figure 1.

Pour simplifier la puce microfluidique 40, le canal principal et chaque canal secondaire sont rectilignes. De manière avantageuse, chaque canal secondaire est orienté perpendiculairement au canal principal, permettant un cisaillement complet de la phase dispersée par la phase continue.

Chaque canal de la puce peut recevoir un traitement de surface sur leur surface interne de manière à les rendre hydrophobes ou hydrophiles, selon la nature aqueuse ou organique de la phase dispersée, et ainsi faciliter la formation des gouttes.

Selon l'invention, la phase dispersée correspond au fluide à caractériser et est donc injectée dans le canal principal de la puce.

Le fluide à caractériser peut se présenter sous la forme d'une solution aqueuse ou d'une solution organique. Dans le cas où le fluide se présente sous la forme d'une solution organique, la phase continue injectée dans chaque canal secondaire se présente sous la forme d'une solution aqueuse. Et dans le cas où le fluide à caractériser se présente sous la forme d'une phase dispersée aqueuse, la phase continue injectée est organique et non miscible avec la phase dispersée.

De manière avantageuse, la puce microfluidique 40 employée comporte également une chambre (désignée ch sur la figure 1) dans laquelle débouche le canal principal au niveau du point de jonction. La présence de cette chambre ch en aval du point de jonction n'est pas nécessaire dans le fonctionnement du rhéomètre de l'invention, mais elle permet de concentrer le cisaillement au point de jonction. Elle forme ainsi un élargissement ou évasement du canal principal en aval du point de jonction. En aval de la chambre, le canal principal reprend ses dimensions initiales présentes en amont ou peut présenter des dimensions différentes. Si elle est présente, la chambre ch peut prendre différentes formes, par exemple à section longitudinale triangulaire ou rectangulaire, ou une en forme de cône. Dans la suite de la description et sur les figures annexées, de manière non limitative, la chambre est présentée avec une architecture à section longitudinale en triangle.

De manière avantageuse, la profondeur ou largeur de la chambre ch située en aval du point de jonction sera choisie suffisante pour ne pas limiter la taille des gouttes à celle du canal et permettre ainsi aux gouttes d'atteindre leur forme sphérique. De cette manière, la mesure du diamètre des gouttes dans la chambre permet de calculer directement le volume des gouttes, avec plus de précision que dans le cas de gouttes confinées dans un canal où le calcul de leur volume doit être approximé.

L'architecture de mesure comporte un premier dispositif d'injection 10 de la phase dispersée, c'est-à-dire de l'échantillon de fluide à caractériser, dans le canal principal de la puce microfluidique 40. Ce dispositif d'injection 10 comporte un réservoir de phase dispersée (non représenté) et des moyens de contrôle de la pression à laquelle la phase dispersée est injectée dans le canal principal. Ces moyens permettent ainsi d'injecter la phase dispersée dans le canal principal à une pression déterminée fixe, qui servira notamment de données d'entrée pour caractériser le fluide.

L'architecture de mesure comporte également un deuxième dispositif d'injection 20 de la phase continue, c'est-à-dire du fluide de cisaillement, dans chaque canal secondaire (deux canaux secondaires décrits ci-dessus). Ce dispositif d'injection 20 comporte un réservoir de phase continue (non représenté) et des moyens de contrôle de la pression ou du débit auquel la phase continue est injectée dans chaque canal secondaire. La phase continue est injectée à la même pression ou au même débit dans les deux canaux secondaires. La pression ou le débit appliqué à la phase continue servira également de données d'entrée pour la caractérisation du fluide. Pour simplifier le traitement et les calculs, le contrôle en débit sera plus avantageux. Pour simplifier l'architecture de mesure, le contrôle en pression est avantageux car les moyens employés peuvent être mutualisés avec les moyens de contrôle en pression utilisés pour l'injection de la phase dispersée. De plus, un contrôle en pression amènera précision et stabilité.

Entre le premier dispositif d'injection 10 et l'entrée du canal principal, le dispositif microfluidique peut comporter un premier tuyau de liaison (illustré par la flèche). Il en est de même entre le deuxième dispositif d'injection 20 et l'entrée de chaque canal secondaire, où un deuxième tuyau de liaison peut être employé (illustré par les deux flèches).

Dans la suite de la description, on parlera de canal de phase dispersée Cd pour évoquer le canal principal et son tuyau de liaison éventuel vers le premier dispositif d'injection 10. Et on parlera de canal de phase continue Cc pour évoquer chaque canal secondaire et le tuyau de liaison qui les connecte au deuxième dispositif d'injection 20. Les deux références Cd et Cc sont indiquées sur la figure 1.

Plusieurs configurations seront ainsi envisageables et à distinguer dans l'architecture :

- Le canal de phase dispersée Cd comporte une section rectangulaire (de largeur désignée w, de profondeur d et de longueur Lrect) ;

- Le canal de phase dispersée Cd comporte une section circulaire et est donc cylindrique (de rayon r et de longueur Lcyl) ;

- Le canal de phase dispersée Cd comporte un canal de section circulaire connecté en série avec un canal à section rectangulaire.

Ces différentes configurations permettent de tenir compte de différentes architectures microfluidiques. La phase dispersée peut en effet être injectée directement dans le canal principal de la puce 40 depuis le dispositif d'injection, sans tuyau de liaison, ou par l'intermédiaire d'un tuyau comme décrit ci-dessus, ce tuyau étant alors de section circulaire. De même, il est également possible que le tuyau de liaison et le canal principal soient tous deux de section identique, circulaire ou rectangulaire.

L'architecture de mesure comporte en outre un dispositif de mesure 30 positionné en aval du point de jonction, permettant notamment de compter les gouttes de phase dispersée dans le canal de phase dispersée et mesurer leur diamètre. Ce dispositif de mesure 30 peut prendre différentes formes. Il peut s'agir par exemple d'une caméra rapide connectée sur un microscope et qui permet d'acquérir des images dont le traitement permet de déduire la fréquence et le volume des gouttes de phase dispersée. Les moyens de traitement des images pourront être intégrés au dispositif de mesure 30 ou déportés dans le système de traitement qui va être décrit ci-dessous. Toute autre solution de mesure de ces paramètres pourrait bien entendu être employée.

De manière avantageuse, l'architecture de mesure pourra comporter également un dispositif de chauffage et un capteur de température (non représentés) afin d'effectuer des estimations de la viscosité du fluide en fonction de la température.

Comme décrit ci-dessus, cette architecture de mesure est associée à un système de traitement UC, de manière à former le rhéomètre microfluidique de l'invention.

Ce système de traitement UC comporte au moins un microprocesseur et une mémoire. Le système de traitement UC comporte également des modules logiciels destinés à être exécutés par le microprocesseur pour caractériser le fluide à partir de données d'entrée. Les données d'entrée sont des données de mesure issues du dispositif de mesure 30 ou des paramètres liés à l'architecture de mesure ou définis lors de la mise en oeuvre de l'architecture de mesure. Les différents modules logiciels du système de traitement seront détaillés ci-dessous en liaison avec la description du procédé de caractérisation du fluide.

Le système de traitement UC comporte avantageusement au moins un module d'entrée IN1 relié au dispositif de mesure 30 décrit ci-dessus pour recueillir les images à traiter si le dispositif de mesure n'est pas doté de moyens de traitement ou directement les valeurs de fréquence et du volume des gouttes de phase dispersée si le dispositif de mesure est doté de moyens de traitement.

Le système de traitement comporte avantageusement un premier module de sortie OUT1 sur lequel est connecté le premier dispositif d'injection 10 et un deuxième module de sortie OUT2 sur lequel est connecté le deuxième dispositif d'injection 20. Le système de traitement envoie ainsi une consigne d'injection au premier dispositif d'injection pour injecter la phase dispersée dans le canal de phase dispersée à une pression déterminée et une consigne d'injection au deuxième dispositif d'injection pour injecter la phase continue dans chaque canal de phase continue à une pression ou à un débit déterminé. Si des capteurs sont présents dans l'architecture de mesure, comme le capteur de température évoqué ci-dessus, ou un capteur de pression pour mesurer la pression Pj à la jonction entre le tuyau de liaison et l'entrée du canal principal (voir ci-après), le système de traitement UC comportera des modules d'entrée supplémentaires.

Selon l'invention, la phase dispersée et la phase continue sont injectées dans le dispositif microfluidique à une pression supérieure à la pression atmosphérique.

Le système de traitement UC se présentera par exemple sous la forme d'un automate programmable comportant par exemple un module unité centrale, chargé d'effectuer les traitements, de traiter les données d'entrée et de générer les données de sortie et plusieurs modules d'entrées/sorties tels que décrits ci-dessus. Il pourra comporter un module de communication lui permettant de communiquer des informations sur un réseau de communication.

A partir de l'architecture de mesure telle que décrite ci-dessus et du système de traitement UC, l'invention consiste à caractériser un fluide, en déterminant sa viscosité dynamique.

Dans la suite de la description, on tiendra compte des notations et des principes suivants :

- Les pressions appliquées en entrée par les dispositifs d'injection sont notées P ;

- Les résistances hydrauliques sont notées R ;

- Les débits sont notés Q ;

- L'indice d fait référence à la phase dispersée et l'indice c fait référence à la phase continue ;

- Pour chaque canal, la résistance hydraulique tient compte à la fois de la résistance du canal dans la puce microfluidique (principal ou secondaire) mais aussi de celle du tuyau de liaison connecté sur l'entrée du canal.

Comme décrit ci-dessus, l'invention consiste à introduire la solution à caractériser comme phase dispersée et à utiliser une phase continue non miscible de viscosité connue avec la solution à caractériser de manière à former des gouttes dans la puce microfluidique 40, à la jonction du canal principal avec chaque canal secondaire. La génération de gouttes permet en effet de calculer le débit de la phase dispersée. En effet, par conservation de la masse, ce débit Q s'exprime par la relation suivante :

$$Q = f \times V$$

Dans laquelle f est la fréquence de production de gouttes et V le volume des gouttes.

Le principe de l'invention consiste en outre à déterminer la variation de pression entre la pression à laquelle la phase dispersée est injectée par le dispositif d'injection dans le canal de phase dispersée Cd et la pression au point de jonction. Cette variation s'exprime par la relation suivante :

$$\Delta P = P_d - P_{mffd} \qquad (1)$$

Dans laquelle $P_d$ est la pression appliquée par le premier dispositif d'injection à l'entrée du canal de phase dispersée et $P_{mffd}$ est la pression à la jonction entre les deux phases, calculée grâce à un modèle analytique du système qui est décrit ci-dessous.

A titre d'exemple et de manière non limitative, ce modèle analytique est établi pour une puce microfluidique 40 qui comporte les caractéristiques suivantes :

- Un canal principal de résistance hydraulique Rd ;

- Deux canaux secondaires de résistance hydraulique Rc ;

- Une chambre située en aval du point de jonction, de forme triangulaire et de résistance hydraulique Rch ;

- Un canal situé en aval de la chambre, de résistance hydraulique Rav.

Le modèle analytique est mémorisé dans le système de traitement. Pour le déterminer, le raisonnement est décrit ci-dessous.

Pour rappel, on a :

- Dans le cas d'une conduite cylindrique (telle que les tuyaux de liaison), la résistance hydraulique est égale à :

$$R = \frac{8\eta L}{\pi r^4} \qquad (2)$$

où $\eta$ est la viscosité dynamique du fluide circulant dans le canal et $r$ et $L$ sont respectivement le rayon et la longueur de la conduite.

- Dans le cas d'un canal rectangulaire, la résistance hydraulique s'exprime par la relation suivante :

$$R = \frac{4\eta L}{w d^3 \xi} \qquad (3)$$

Dans laquelle :

$$\xi = \frac{1}{3} - 64\alpha \frac{1}{\pi^5} \tan h\left(\frac{\pi}{2\alpha}\right) \qquad \text{et} \qquad \alpha = \frac{d}{w} < 1$$

où η est la viscosité dynamique du fluide circulant dans le canal et w, d et L sont respectivement la largeur, la profondeur et la longueur du canal.

Dans le cas de la chambre, la résistance hydraulique sera celle d'un canal rectangulaire si elle est de section rectangulaire. Si elle présente une section longitudinale en triangle, sa résistance hydraulique sera celle d'un canal de section rectangulaire de largeur égale à la largeur moyenne du triangle.

En utilisant l'analogie d'un système fluidique avec un système électrique, les règles suivantes sont appliquées :

- Les résistances en série s'ajoutent.
- Au niveau d'une jonction, la somme des débits entrants est égale à la somme des débits sortants.

Le modèle est établi en l'absence de génération de gouttes. Pour cela, seule la partie "phase continue" du système est prise en compte et le débit de la phase dispersée est considéré comme nul : $Q_d = 0$ m$^3$/s. Il faut noter que la viscosité du fluide utilisée comme phase continue est préalablement connue et fait partie des paramètres d'entrée pour la caractérisation du fluide injectée comme phase dispersée.

Il en résulte les équations suivantes :

$$Q_c = 2Q_{c1} \qquad (4)$$

$$P_c - P_{out} = P_c = R_c Q_{c1} + R_{ch} Q_c + R_{av} Q_c \qquad (5)$$

$$P_c - P_{mffd} = R_c Q_{c1} \qquad (6)$$

Avec $P_{out} = 0$, la pression à la sortie du canal étant égale à la pression atmosphérique.

Après résolution du système d'équation, il en résulte :

$$Q_{c1} = \frac{P_c}{2R_{ch} + R_c + 2R_{av}} \qquad (7)$$

$$P_{mffd} = \frac{2R_{ch}P_c + 2R_{av}P_c}{2R_{ch} + R_c + 2R_{av}} \qquad (8)$$

Ce modèle reste valable lors de la génération de gouttes ($Q_d > 0$ m3/s) lorsque le diamètre D des gouttes est inférieur à 0,7 fois la largeur w du canal "aval". Lorsque les gouttes sont de taille supérieure, alors :

$$P_{mffd} = P_c - R_c Q_{c1} \qquad (9)$$

$$Q_{c1} = \left(1{,}61 - 0{,}92 \left(\frac{D}{W}\right)\right) \left(\frac{P_c}{2R_{ch}+R_c+2R_{av}}\right) \qquad (10)$$

La relation (10) ci-dessus a été déterminée expérimentalement par des mesures de débits.

Bien entendu, selon la configuration de la puce (présence d'une chambre ou non par exemple), le modèle sera différent. Dans une puce microfluidique où la chambre n'est pas présente, la résistance hydraulique liée à la chambre n'est pas présente dans l'expression (8). On a alors l'expression suivante :

$$P_{mffd} = \frac{2R_{av}P_c}{R_c + 2R_{av}}$$

De même, il faudra également tenir compte dans les calculs si le deuxième dispositif d'injection vers chaque canal de phase continue est contrôlé en pression ou en débit. Dans le premier cas, la pression Pc sera connue et dans le deuxième cas, ce sera le débit Qc (c'est-à-dire Qc1) qui sera connu.

La pression $P_{mffd}$ calculée par le modèle correspond à la pression au niveau du point de jonction dans la phase continue.

En réalité, la pression au niveau du point de jonction au sein de la phase dispersée est différente de cette pression. Toutefois, l'écart de pression entre la phase dispersée et la phase continue en ce point est de l'ordre de 3 mPa.s. Cette valeur étant comparable à l'incertitude sur les pressions ($\Delta$P$\approx$1%*PF avec PF la valeur consigne en pression demandée en entrée des dispositifs d'injection), la pression de la phase dispersée au niveau de la jonction est considérée comme égale à celle de la phase continue, c'est à dire à la pression $P_{mffd}$ calculée par le modèle.

Le modèle analytique, exprimé par les relations (7) et (8) ci-dessus, est mémorisé dans le système de traitement UC et employé pour déterminer la viscosité dynamique du fluide à caractériser, que le fluide soit Newtonien ou non-Newtonien. On verra ci-dessous le procédé mis en oeuvre par le système pour déterminer la viscosité.

Lors de la mise en oeuvre du procédé de caractérisation du fluide, le système de traitement UC utilise certains paramètres d'entrée fixes, comme les paramètres géométriques des canaux et la viscosité de la phase continue injectée. En outre, il utilise les valeurs de mesure de fréquence et du volume des gouttes de phase dispersée afin de déterminer le débit de phase dispersée dans le canal de phase dispersée.

Pour rappel, on a le débit de la phase dispersée exprimé par la relation (11) ci-dessous :

$$Q = f \times V \tag{11}$$

Dans laquelle f est la fréquence de production de gouttes et V le volume des gouttes.

La fréquence et le volume sont mesurés par le dispositif de mesure évoqué ci-dessus, qui comporte par exemple une caméra capturant des images qui sont ensuite traitées. La fréquence est alors calculée en considérant le nombre d'images N acquises entre deux gouttes produites et la fréquence d'acquisition Ffps de la caméra, selon la relation suivante :

$$f = \frac{F_{fps}}{N} \tag{12}$$

Le volume de goutte est pour sa part déterminé en mesurant le diamètre de la goutte sur les images acquises par la caméra. Lorsque le diamètre D est inférieur à la profondeur d du canal, alors :

$$V = \frac{4}{3}\pi\left(\frac{D}{2}\right)^3 \tag{13}$$

Lorsque le diamètre D est supérieur à la profondeur d du canal, cela signifie que la goutte est confinée dans la profondeur du canal. Son volume est alors calculé en utilisant la formule de Nie *et al (voir publication intitulée "*Emulsification in a microfluidic flow-focusing device : effect of the viscosities of the liquids - Nie et al - DOI10.1007/s10404-008-0271-y*)* ci-dessous :

$$V = \frac{\pi}{12}\left(2D^3 - (D-d)^2(2D+d)\right) \tag{14}$$

Hormis, l'étape d'acquisition et de détermination du débit de la phase dispersée décrite ci-dessus, le procédé de caractérisation comporte les étapes décrites ci-dessous. On distinguera le cas où le fluide est Newtonien du cas où le fluide est non-Newtonien.

**Pour un fluide Newtonien**

Dans le cas d'un fluide Newtonien, le débit de la phase dispersée est égal à :

$$Q_d = \frac{P_d - P_{mffd}}{R_d} \tag{15}$$

Dans laquelle :

- Pd est la pression appliquée en entrée du canal Cd à la phase dispersée ;

- Pmffd est la pression au point de jonction entre la phase dispersée et la phase continue ;
- Rd est la résistance hydraulique de la phase dispersée.

En combinant les relations (11) et (15), il en résulte la relation suivante :

$$Q_d = f * V = \frac{P_d - P_{mffd}}{R_d}$$

Trois cas sont possibles :

a) Le canal de phase dispersée est un canal rectangulaire uniquement (de largeur w, de profondeur d et de longueur LRect) ;
b) Le canal de phase dispersée est un canal cylindrique uniquement (de rayon r et de longueur LCyl) ;
c) Le canal de phase dispersée est un canal cylindrique en série avec un canal rectangulaire ;

Dans le cas a), la résistance hydraulique Rd s'exprime par la relation suivante :

$$R = \frac{4\eta L_{Rect}}{wd^3 \xi} \tag{3}$$

Dans laquelle :

$$\xi = \frac{1}{3} - 64\alpha \frac{1}{\pi^5} \tan h\left(\frac{\pi}{2\alpha}\right) \qquad \text{et} \qquad \alpha = \frac{d}{w} < 1$$

où $\eta$ est la viscosité dynamique de la phase dispersée.

Dans le cas b), la résistance hydraulique Rd s'exprime par la relation suivante :

$$R_d = R_{dCyl} = \frac{8\eta L_{Cyl}}{\pi r^4}$$

où $\eta$ est la viscosité dynamique de la phase dispersée.

Dans le cas c), la résistance hydraulique Rd s'exprime par la relation suivante :

$$R_d = R_{dRect} + R_{dCyl}$$

La résistance hydraulique Rd est donc proportionnelle à la viscosité dynamique de la phase dispersée, selon la relation suivante :

$$R_d = K\eta_d \tag{16}$$

Dans laquelle K dépend uniquement des dimensions du canal.
Dans le cas d'un fluide Newtonien, la viscosité dynamique peut donc s'exprimer par la relation suivante :

$$\eta_d = \frac{P_d - P_{mffd}}{K * f * V} \tag{17}$$

En connaissant les dimensions des canaux en amont de la jonction où sont générées les gouttes et en calculant Pmffd grâce au modèle analytique mis en place et mémorisé, il est alors possible de déterminer la viscosité de la phase dispersée simplement en mesurant la taille et la fréquence des gouttes produites pour différentes pressions Pd appliquée à la phase dispersée.

De façon pratique, les valeurs de f*V (obtenues expérimentalement) sont tracées en fonction de la variation de pression *Pd-Pmffd* (calculé analytiquement). Les données sont ajustées par une régression linéaire. Le coefficient directeur a est alors égal à :

$$a = \frac{1}{R_d} = \frac{1}{K\eta_d} \tag{18}$$

Il en résulte que la viscosité dynamique est égale à :

$$\eta_d = \frac{1}{Ka} \tag{19}$$

**Pour un fluide non-Newtonien**

Dans le cas d'un fluide non-Newtonien, la relation (15) définie ci-dessus n'est plus valable. La viscosité dépend en effet du cisaillement exercé sur le fluide. L'estimation de la viscosité dynamique nécessite le calcul de la contrainte de cisaillement aux parois, du taux de cisaillement apparent et du taux de cisaillement réel.

Dans ce cas d'un fluide non-Newtonien, le débit de la phase dispersée s'exprime toujours par la relation (11) évoquée ci-dessus, c'est-à-dire :

$$Q = f \times V \tag{11}$$

Dans laquelle f est la fréquence de production de gouttes et V le volume des gouttes.

Comme évoqué précédemment, trois cas sont possibles :

    a) Le canal de phase dispersée est un canal rectangulaire uniquement (de largeur w, de profondeur d et de longueur LRect) ;
    b) Le canal de phase dispersée est un canal cylindrique uniquement (de rayon r et de longueur LCyl) ;
    c) Le canal de phase dispersée est un canal cylindrique (=tuyau de liaison) en série avec un canal rectangulaire.

L'étape suivante qui est mise en oeuvre consiste à déterminer la contrainte de cisaillement aux parois pour chaque valeur de pression Pd appliquée en entrée à la phase dispersée.

La contrainte de cisaillement aux parois $\tau_W$ est calculée grâce à l'expression suivante :

$$\tau_W = \Delta P \left( \frac{A_{section}}{A_{mouillé}} \right)$$

Dans laquelle :

-   Asection est l'aire de la section du canal de phase dispersée,
-   Amouillé est l'aire du canal de phase dispersée mouillée par le fluide.

Dans le cas a), la contrainte de cisaillement aux parois $\tau_W$ s'exprime :

$$\tau_W = \tau_{WRect} = \Delta P \left( \frac{wd}{2L_{Rect}(w+d)} \right)$$

Dans le cas b), la contrainte de cisaillement aux parois $\tau_W$ s'exprime :

$$\tau_W = \tau_{WCyl} = \Delta P \left( \frac{r}{2L_{Cyl}} \right)$$

Dans le cas c), la contrainte de cisaillement aux parois $\tau_W$ doit être calculée indépendamment dans le canal cylindrique et dans le canal rectangulaire :

$$\tau_{WCyl} = \Delta P_{Cyl}\left(\frac{r}{2L_{Cyl}}\right)$$

Avec $\Delta P_{Cyl} = P_d$ - $P_j$ où $P_j$ est la pression à la jonction entre le canal cylindrique et le canal principal rectangulaire.

$$\tau_{WRect} = \Delta P_{Rect}\left(\frac{wd}{2L_{Rect}(w+d)}\right)$$

Avec $\Delta P_{Rect} = P_j$ - $P_{mffd}$ où $P_j$ est la pression à la jonction entre le canal cylindrique et le canal principal rectangulaire.

La pression $P_j$ n'est a priori pas connue. Elle est par exemple calculée par une approximation. Elle est déterminée en considérant que le diamètre du tuyau de liaison est assez élevé pour que le cisaillement soit considéré comme négligeable dans le tuyau. La relation (2) ci-dessus peut alors être employée pour le calcul de la résistance hydraulique du tuyau de liaison pour la phase dispersée. Il en résulte que :

$$P_j = P_d - R_{dT}Q = P_d - \frac{8\eta_{0d}L_T}{\pi r^4}Q$$

Dans laquelle :

- LT correspond à la longueur du tuyau de liaison.
- RdT correspond à la résistance hydraulique du tuyau de liaison.
- $\eta_{0d}$ correspond à la viscosité à cisaillement nul de la phase dispersée. Cette viscosité n'est a priori pas connue. Elle est déterminée en considérant qu'à faible débit de phase dispersée, le caractère rhéofluidifiant est négligeable. Elle est donc calculée en utilisant la relation (17) avec les valeurs les plus faibles de f, V et Pd.

Cependant, en variante de réalisation, un capteur de pression peut être positionné à la jonction entre le tuyau de liaison et le canal principal de la puce microfluidique pour mesurer la pression Pj.

Ensuite, il s'agit de déterminer le taux de cisaillement apparent pour chaque valeur de débit Q de phase dispersée mesurée.

Dans le cas a), le taux de cisaillement apparent $\acute{\gamma}_a$ exercé sur le fluide est calculé grâce à l'expression suivante :

$$\acute{\gamma}_a = \frac{6Q}{wd^2} = \frac{6fV}{wd^2}$$

Dans le cas b), le taux de cisaillement apparent $\acute{\gamma}_a$ exercé sur le fluide est calculé grâce à l'expression suivante :

$$\acute{\gamma}_a = \frac{4Q}{\pi r^3} = \frac{4fV}{\pi r^3}$$

Dans le cas c), le taux de cisaillement apparent $\acute{\gamma}_a$ exercé sur le fluide doit être calculé indépedemment pour le canal cylindrique et pour le canal rectangulaire par les relations ci-dessus.

Dans le cas d'un fluide non-Newtonien, le taux de cisaillement réel aux parois est calculé grâce à la correction de Weissenberg-Rabinowitsch :

$$\acute{\gamma} = \frac{\acute{\gamma}_a}{3}\left(2 + \frac{dln\acute{\gamma}_a}{dln\tau_W}\right)$$

Le facteur $\frac{dln\acute{\gamma}_a}{dln\tau_W}$ est déterminé en traçant $\acute{\gamma}_a$ en fonction de $\tau_W$ dans un graphe log-log et en ajustant les points par une loi de puissance. La puissance de la loi correspondant à $\frac{dln\acute{\gamma}_a}{dln\tau_W}$.

Il est enfin possible de déterminer la viscosité dynamique, par la formule :

$$\eta = \frac{\tau_W}{\acute{\gamma}}$$

Elle peut être tracée en fonction de $\acute{\gamma}$.

Dans le cas c), la viscosité dynamique est calculée indépendamment pour le canal cylindrique et pour le canal rectangulaire en utilisant les couples ($\tau_W, \acute{\gamma}$) associés au canal cylindrique et au canal rectangulaire.

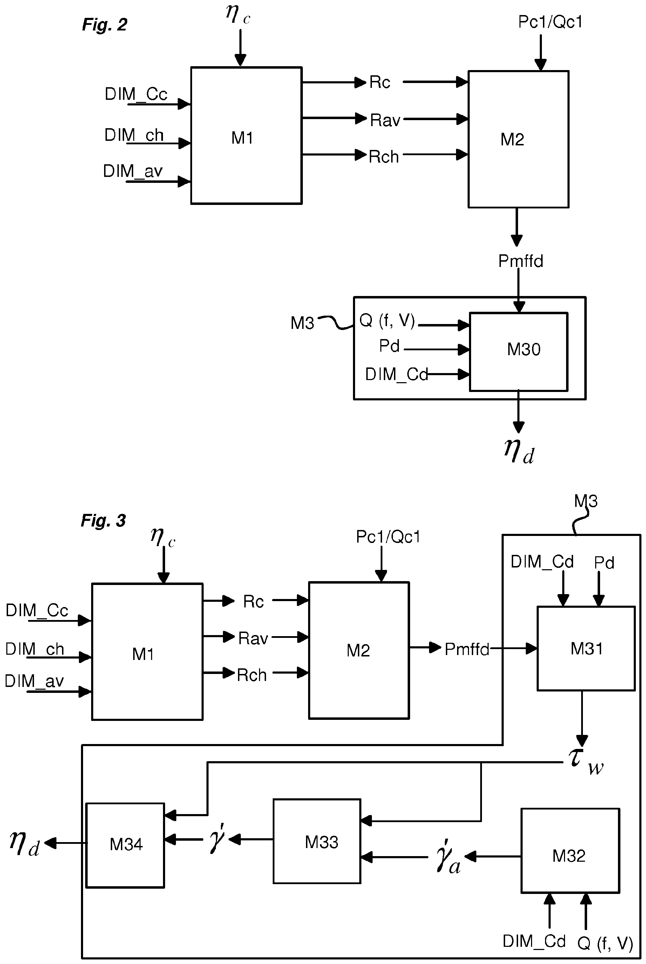

De manière fonctionnelle, en référence aux figures 2 et 3, le principe de fonctionnement est défini ci-dessous, pour un fluide Newtonien ou non-Newtonien.

**Pour un fluide Newtonien :**

Le système de traitement comporte un premier module M1 destiné à déterminer les différentes résistances hydrauliques de l'architecture microfluidique, c'est-à-dire Rch, Rav, Rc, et Rd.

Ce module M1 reçoit en entrée :

- Les caractéristiques géométriques de chaque canal secondaire, de la chambre si celle-ci est présente et du canal situé en aval de la chambre ch dans la puce microfluidique 40.

- Les caractéristiques des tuyaux de liaison reliant chaque dispositif d'injection 10, 20 au canal principal et au canal secondaire de la puce 40.

- La viscosité du fluide utilisé comme phase continue.

Sur la figure 2, ces caractéristiques sont référencées DIM_Cd pour le canal de phase dispersée, DIM_Cc pour le canal de phase continue, DIM_ch pour la chambre et DIM_av pour le canal situé en aval de la chambre.

Le système de traitement UC comporte un deuxième module M2 d'estimation de la pression Pmffd au point de jonction à l'aide du modèle analytique décrit ci-dessus et défini par les relations (7) et (8).

Ce module M2 reçoit en entrée :

- La valeur de la résistance hydraulique Rc d'un canal secondaire, celle-ci étant déterminée par le module M1 ;

- La valeur de la résistance hydraulique Rch de la chambre si celle-ci est présente, déterminée par le module M1 ;

- La valeur de la résistance hydraulique Rav du canal situé en aval de la chambre, déterminée par le module M1 ;

- La valeur de pression Pc1 appliquée à la phase continue dans chaque canal secondaire si la phase continue est contrôlée en pression ou la valeur du débit Qc1 appliquée à la phase continue si celle-ci est contrôlée en débit ;

A partir de la pression Pmffd déterminée par le module M2, un troisième module M3 est chargé de déterminer la viscosité dynamique.

Ce troisième module M3 comporte plus particulièrement un module M30 dédié à la détermination de la viscosité dynamique pour un fluide Newtonien. Ce module M30 reçoit en entrée :

- La pression Pmffd estimée au point de jonction grâce au modèle analytique et déterminée par le module M2 ;

- La valeur de pression Pd appliquée à la phase dispersée en entrée du canal de phase dispersée ;

- Le débit Q de phase dispersée déterminée à partir de la fréquence et du volume des gouttes de phase dispersée ;

- Les données géométriques du canal de phase dispersée DIM_Cd permettant de déterminer le facteur K ;

## Expérimentation pour un fluide Newtonien

Dans cet exemple, la phase dispersée s'écoule dans un tuyau de liaison cylindrique (de type Tygon - Marque déposée) puis, dans la puce microfluidique 40, à travers un canal principal de section rectangulaire en amont du point de jonction. L'exemple de réalisation correspond donc au cas c) défini ci-dessus.

La puce microfluidique 40 a une profondeur d=200 $\mu$m. Le canal de phase dispersée dans la puce a une largeur w=200 $\mu$m. Les tuyaux de liaison présentent un diamètre interne de 510 $\mu$m. Les tuyaux de liaison qui relient le réservoir de phase continue à chaque canal secondaire présentent une longueur L de 30 cm. Le tuyau de liaison qui relie le réservoir de fluide à caractériser, formant la phase dispersée, a une longueur L de 16 cm. Le tuyau de sortie de la puce a une longueur L de 20 cm.

Les fluides à caractériser sont des solutions de Ficoll (polysaccharide) à 0,527 g/mL, 0,925 g/mL et 1,174 g/mL. La phase continue est de l'huile de soja de viscosité dynamique $\eta$c=50,7 mPa.s.

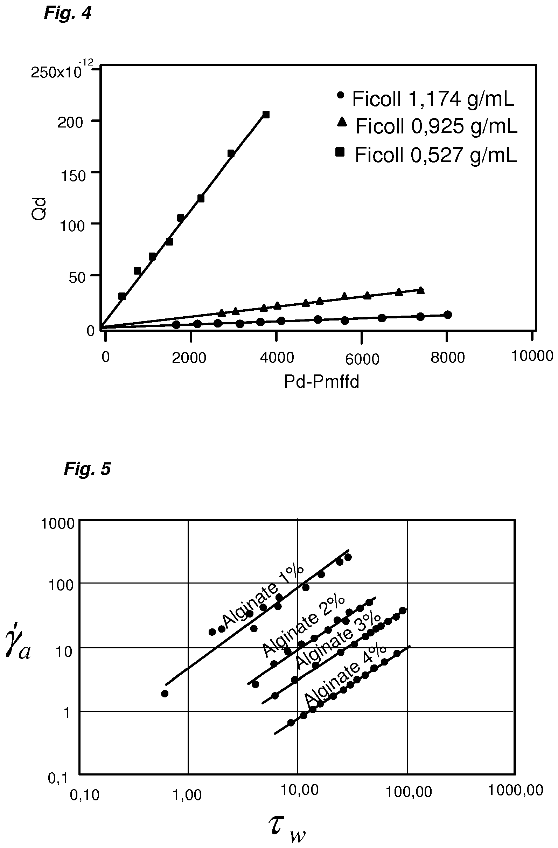

La figure 4 présente le graphique de débit exprimé par le produit f*V (obtenus expérimentalement) en fonction de la différence de pression *Pd-Pmffd* (calculé analytiquement) pour chacune des trois solutions de Ficoll évoqués ci-dessus. Les marqueurs correspondent aux points expérimentaux et les lignes aux régressions linéaires. Le tableau ci-dessous présente les valeurs du coefficient de régression linéaire et les viscosités calculées grâce aux régressions linéaires.

| Phase dispersée | r² | $\eta$d (mPa.s) |
|---|---|---|
| Ficoll 1,174 g/mL | 0,998 | 3504 |
| Ficoll 0,925 g/mL | 0,991 | 1031 |
| Ficoll 0,527 g/mL | 0,975 | 99 |

## Pour un fluide non-Newtonien :

Le système de traitement UC comporte les mêmes modules M1 et M2 définis ci-dessus pour un fluide Newtonien. Il comporte également le module M3 de détermination de la viscosité dynamique à partir de la pression déterminée au point de jonction.

Pour un fluide non-Newtonien, ce module M3 comporte un module M31 permettant de déterminer la contrainte de cisaillement $\tau_w$ dans le canal de phase dispersée. Ce module M31 reçoit ainsi en entrée :

- La pression Pmffd estimée au point de jonction grâce au modèle analytique et déterminée par le module M2 ;

- La valeur de pression Pd appliquée à la phase dispersée en entrée du canal de phase dispersée ;

- Le type de canal de phase dispersée et sa géométrie (DIM_Cd), pour définir le cas de fonctionnement parmi les cas a), b) ou c) définis ci-dessus ;

Le système de traitement UC comporte un module M32 permettant de déterminer le taux de cisaillement apparent $\dot{\gamma}_a$ . Pour cela, ce module M32 reçoit en entrée :

- Le débit Q de phase dispersée déterminée à partir de la fréquence f et du volume V mesurés des gouttes de phase dispersée ;

- Le type de canal de phase dispersée et sa géométrie (DIM_Cd), pour définir le cas de fonctionnement parmi les cas a), b) ou c) définis ci-dessus ;

Le système de traitement UC comporte un module M33 destiné à déterminer le taux de cisaillement réel $\dot{\gamma}$ aux parois. Ce module M50 reçoit en entrée :

- La contrainte de cisaillement $\tau_w$ déterminée par le module M31 ;

- Le taux de cisaillement apparent $\grave{\gamma}_a$ déterminé par le module M32 ;

Le système de traitement UC comporte un module M34 destiné à déterminer la viscosité dynamique d'un fluide non-Newtonien. Ce module reçoit en entrée :

- La contrainte de cisaillement $\tau_W$ déterminée par le module M31 ;

- Le taux de cisaillement réel $\gamma$ $\grave{\gamma}$ déterminé par le module M33 ;

**Expérimentation pour un fluide non-Newtonien**

Dans cet exemple, la phase dispersée s'écoule dans un tuyau de liaison cylindrique (de type Tygon - marque déposée) puis, dans la puce microfluidique 40, dans un canal principal de section rectangulaire en amont du point de jonction. L'exemple de réalisation correspond donc au cas c).

La puce microfluidique 40 a une profondeur d=200 $\mu$m. Le canal de phase dispersée a une largeur w=200 $\mu$m. Les tuyaux de liaison présentent un diamètre interne de 510 $\mu$m. Les tuyaux de liaison qui relient le réservoir de phase continue à chaque canal secondaire présentent une longueur L de 30 cm. Le tuyau de liaison qui relie le réservoir de fluide à caractériser, formant la phase dispersée, a une longueur L de 16 cm. Le tuyau de sortie de la puce a une longueur L de 20 cm.

Les fluides à caractériser sont des solutions d'alginate (polysaccharide) à 1%, 2% et 3% wt/wt. La phase continue est de l'huile de soja de viscosité dynamique $\eta$c=50,7 mPa.s.

Dans le cas du tuyau de liaison de rayon r et de longueur LT :

$$\tau_W = \Delta P_T \left( \frac{r}{2L_T} \right)$$

Avec $\Delta P_T = P_d - P_j$ où $P_j$ est la pression à la jonction entre le Tuyau et la puce

$$\grave{\gamma}_a = \frac{4Q}{\pi r^3} = \frac{4fV}{\pi r^3}$$

Dans le cas du canal principal présent dans la puce de largeur w et de profondeur d :

$$\tau_W = \Delta P_{puce} \left( \frac{wd}{2L(w+d)} \right)$$

Avec $\Delta P_{puce} = P_j - P_{mffd}$ où $P_j$ est la pression à la jonction entre le tuyau de liaison et le canal principal de la puce.

$$\grave{\gamma}_a = \frac{6Q}{wd^2} = \frac{6fV}{wd^2}$$

La pression $P_j$ n'est a priori pas connue. Elle est déterminée en considérant que le diamètre du tuyau de liaison est assez élevé pour que le cisaillement soit tel que le caractère rhéofluidifiant soit négligeable dans le tuyau. La relation (2) définie ci-dessus peut alors être utilisée pour le calcul de la résistance hydraulique du tuyau de liaison de phase dispersée. On a alors la relation suivante :

$$P_j = P_d - R_{dT}Q = P_d - \frac{8\eta_{0d}L_T}{\pi r^4}Q$$

Avec $\eta_{0d}$ la viscosité à cisaillement nul de la phase dispersée. Cette viscosité n'est a priori pas connue. Elle est déterminée en considérant qu'à faible débit de phase dispersée, le caractère rhéofluidifiant est négligeable. Elle est donc calculée en utilisant la relation (17) ci-dessus en utilisant les valeurs les plus faibles de f, V et Pd.

Il est alors possible de calculer $\tau_W$ et $\gamma_a$ pour chaque couple (Pd, Q) à la fois dans le cas du tuyau de liaison et dans le cas de la puce microfluidique.

La figure 5 présente le taux de cisaillement en fonction de la contrainte de cisaillement aux parois dans un graphe log-log dans le cas des valeurs obtenues pour le canal principal en entrée de la puce microfluidique. Un graphe similaire est obtenu dans le cas des valeurs obtenues dans le tuyau de liaison. L'ajustement des données par une relation linéaire permet de déterminer $\frac{dln\gamma_a}{dln\tau_W}$. Le tableau regroupe les valeurs de $\frac{dln\gamma_a}{dln\tau_W}$ obtenues dans le cas du canal principal et dans le cas du tuyau de liaison.

| | $\frac{dln\gamma_a}{dln\tau_W}$ dans le cas du canal principal de la puce | $\frac{dln\gamma_a}{dln\tau_W}$ dans le cas du tuyau de liaison |
|---|---|---|
| Alginate 4% | 1,1251 | 1 |
| Alginate 3% | 1,0949 | 1,0972 |
| Alginate 2% | 1,1570 | 1,1570 |
| Alginate 1% | 1,2508 | 1,2508 |

Les valeurs de $\frac{dln\gamma_a}{dln\tau_W}$ permettent alors de calculer le taux de cisaillement réel aux parois :

$$\dot\gamma = \frac{\gamma_a}{3}\left(2 + \frac{dln\gamma_a}{dln\tau_W}\right)$$

La viscosité est alors calculée par :

$$\eta = \frac{\tau_W}{\dot\gamma}$$

La solution de l'invention présente ainsi de nombreux avantages :

- Elle est simple à mettre en oeuvre et peu coûteux. Notamment, il ne nécessite pas l'emploi de capteurs de pression.

- Sa puce microfluidique peut être facilement remplacée et est même jetable.

- Elle est adaptée pour la caractérisation de fluide Newtonien ou non-Newtonien.

- Elle est précise et permet de caractériser un échantillon de fluide de faible quantité, notamment inférieur à 1ml. Cela présente un intérêt particulier lorsque le fluide à caractériser est lui-même particulièrement coûteux.

- Elle permet d'appliquer une contrainte de cisaillement importante au fluide à caractériser.

**Revendications**

1. Procédé pour caractériser un fluide, mis en oeuvre dans un système de traitement (UC) destiné à être associé à une architecture de mesure, ladite architecture de mesure comportant :

   - Un dispositif microfluidique du type à génération de gouttes d'une phase dispersée dans une phase continue, qui comporte un canal de phase dispersée destiné à recevoir un échantillon du fluide à caractériser formant la phase dispersée et un canal de phase continue destiné à recevoir un fluide formant la phase continue et débouchant dans le canal de phase dispersée en un point de jonction au niveau duquel sont formés lesdites gouttes,

Ledit procédé étant **caractérisé en ce qu'**il comporte des étapes de :

- Détermination de la pression (Pmffd) de la phase dispersée au point de jonction à partir d'un modèle analytique, dans lequel la pression de la phase dispersée au point de jonction est fonction de la pression à laquelle la phase continue est injectée en entrée du canal de phase continue et d'un coefficient tenant compte de résistances hydrauliques du dispositif microfluidique,
- Détermination du débit de phase dispersée dans le canal de phase dispersée par mesure de la fréquence de génération des gouttes de phase dispersée et du volume des gouttes de phase dispersée,
- Détermination de la viscosité dynamique ($\eta_d$) de la phase dispersée à partir de la variation de pression de la phase dispersée entre la pression à l'entrée du canal de phase dispersée et la pression (Pmffd) au point de jonction déterminée à partir dudit modèle analytique et du débit de phase dispersée dans le canal de phase dispersée.

2. Procédé selon la revendication 1, **caractérisé en ce que** la pression au point de jonction est déterminée par la relation suivante :

$$P_{mffd} = \frac{2R_{av}P_c}{R_c + 2R_{av}}$$

Dans laquelle :

- Pmffd correspond à la pression audit point de jonction ;
- Rav correspond à la résistance hydraulique du canal situé en aval du point de jonction ;
- Rc correspond à la résistance hydraulique du canal de phase continue ;
- Pc correspond à la pression à laquelle la phase continue est injectée dans le canal de phase continue.

3. Procédé selon la revendication 2, **caractérisé en ce que**, pour un fluide à caractériser de type Newtonien, la viscosité dynamique est déterminée à partir de la relation suivante :

$$\eta_d = \frac{P_d - P_{mffd}}{K * f * V}$$

Dans laquelle :

- Pmffd correspond à la pression audit point de jonction ;
- Pd correspond à la pression à laquelle la phase dispersée est injectée dans le canal de phase dispersée ;
- f et V correspondent respectivement à la fréquence et au volume des gouttes de phase dispersée dans le canal de phase dispersée ;
- K correspond à un coefficient tenant compte des paramètres géométriques du canal de phase dispersée.

4. Procédé selon la revendication 2, **caractérisé en ce que** pour un fluide à caractériser de type non-Newtonien, il comporte des étapes de :

- Détermination de la contrainte de cisaillement ($\tau_w$) à partir de la variation de pression de la phase dispersée entre la pression à l'entrée du canal de phase dispersée et la pression (Pmffd) au point de jonction déterminée à partir dudit modèle analytique,

- Détermination du taux de cisaillement apparent ($\dot{\gamma}_a$) aux parois internes du canal de phase dispersée pour chaque valeur de débit de phase dispersée, ledit débit étant déterminé à partir de la fréquence et du volume des gouttes de phase dispersée,

- Détermination du taux de cisaillement réel ($\dot{\gamma}$) à partir de ladite contrainte de cisaillement ($\tau_w$) et dudit taux de cisaillement apparent, et **en ce que** la viscosité dynamique est déterminée à partir dudit taux de cisaillement réel (y) et de ladite contrainte de cisaillement ($\tau_w$).

**5.** Système pour caractériser un fluide, destiné à être associé à une architecture de mesure, ladite architecture de mesure comportant :

- Un dispositif microfluidique du type à génération de gouttes d'une phase dispersée dans une phase continue, qui comporte un canal de phase dispersée destiné à recevoir un échantillon du fluide à caractériser formant la phase dispersée et un canal de phase continue destiné à recevoir un fluide formant la phase continue et débouchant dans le canal de phase dispersée en un point de jonction au niveau duquel sont formés lesdites gouttes,

Ledit système étant **caractérisé en ce qu'**il comporte :

- Un module (M2) de détermination de la pression de la phase dispersée au point de jonction à partir d'un modèle analytique, dans lequel la pression (Pmffd) de la phase dispersée au point de jonction est fonction de la pression à laquelle la phase continue est injectée en entrée du canal de phase continue et d'un coefficient tenant compte de résistances hydrauliques du dispositif,
- Un module de détermination du débit de phase dispersée dans le canal de phase dispersée par mesure de la fréquence de génération des gouttes de phase dispersée et du volume des gouttes de phase dispersée,
- Un module (M3) de détermination de la viscosité dynamique de la phase dispersée à partir des valeurs de la fréquence (f) et du volume (V) des gouttes de phase dispersée déterminées et de la variation de pression de la phase dispersée entre la pression à l'entrée du canal principal et la pression (Pmffd) au point de jonction déterminée à partir dudit modèle analytique.

**6.** Système selon la revendication 5, **caractérisé en ce que** la pression au point de jonction est déterminée par la relation suivante :

$$P_{mffd} = \frac{2R_{av}P_c}{R_c + 2R_{av}}$$

Dans laquelle :

- Pmffd correspond à la pression audit point de jonction ;
- Rav correspond à la résistance hydraulique du canal situé en aval du point de jonction ;
- Rc correspond à la résistance hydraulique du canal de phase continue ;
- Pc correspond à la pression à laquelle la phase continue est injectée dans le canal de phase continue.

**7.** Système selon la revendication 6, **caractérisé en ce que**, pour un fluide à caractériser de type Newtonien, le module (M3) de détermination de la viscosité dynamique comporte un module (M30) dédié recevant en entrée ladite pression déterminée au point de jonction, ladite viscosité dynamique étant déterminée par ce module dédié à partir de la relation suivante :

$$\eta_d = \frac{P_d - P_{mffd}}{K * f * V}$$

Dans laquelle :

- Pmffd correspond à la pression audit point de jonction ;
- Pd correspond à la pression à laquelle la phase dispersée est injectée dans le canal de phase dispersée ;
- f et V correspondent respectivement à la fréquence et au volume des gouttes de phase dispersée dans le canal de phase dispersée ;
- K correspond à un coefficient tenant compte des paramètres géométriques du canal de phase dispersée.

**8.** Système selon la revendication 6, **caractérisé en ce que** pour un fluide à caractériser de type non-Newtonien, le module (M3) de détermination de la viscosité dynamique comporte :

- Un module (M31) de détermination de la contrainte de cisaillement à partir de la variation de pression de la phase dispersée entre la pression à l'entrée du canal de phase dispersée et la pression au point de jonction déterminée à partir dudit modèle analytique,

- Un module (M32) de détermination du taux de cisaillement apparent aux parois internes du canal de phase dispersée pour chaque valeur de débit de phase dispersée, ledit débit étant déterminé à partir de la fréquence et du volume des gouttes de phase dispersée,
- Un module (M33) de détermination du taux de cisaillement réel à partir de ladite contrainte de cisaillement et dudit taux de cisaillement apparent,
- Un module (M34) de détermination de la viscosité dynamique à partir dudit taux de cisaillement réel et de ladite contrainte de cisaillement.

9.  Rhéomètre microfluidique, **caractérisé en ce qu'**il comporte :

- Une architecture de mesure qui comporte :

◦ Un dispositif microfluidique du type à génération de gouttes d'une phase dispersée dans une phase continue, qui comporte un canal de phase dispersée destiné à recevoir un échantillon du fluide à caractériser formant la phase dispersée et un canal de phase continue destiné à recevoir un fluide formant la phase continue et débouchant dans le canal de phase dispersée en un point de jonction au niveau duquel sont formés lesdites gouttes,
◦ Un premier dispositif d'injection (10) de la phase dispersée dans le canal de phase dispersée, comprenant des moyens de contrôle en pression de la phase dispersée à injecter dans ledit canal,
◦ Un deuxième dispositif d'injection (20) de la phase continue dans le canal de phase continue, comprenant des moyens de contrôle en pression ou en débit de la phase continue à injecter dans le canal de phases continue,
◦ Un dispositif de mesure (30) de la fréquence et du volume des gouttes de phase dispersée dans le canal de phase dispersée,

- Un système de traitement pour caractériser un fluide tel que défini dans l'une des revendications 5 à 8.

10. Rhéomètre microfluidique selon la revendication 9, **caractérisé en ce que** le dispositif microfluiduique comporte une puce microfluidique (40) comportant un canal principal formant au moins en partie le canal de phase dispersée et au moins un canal secondaire formant au moins en partie le canal de phase continue.

11. Rhéomètre microfluidique selon la revendication 9 ou 10, **caractérisé en ce que** le dispositif de mesure (30) comporte une caméra agencée pour acquérir des images des gouttes de phase dispersée dans la phase continue.

12. Procédé de caractérisation d'un fluide à l'aide d'un rhéomètre microfluidique tel que défini dans l'une des revendications 9 à 11, **caractérisé en ce qu'**il comporte les étapes suivantes :

- Injection de la phase dispersée dans le canal de phase dispersée à l'aide du premier dispositif d'injection (10) à une pression déterminée,
- Injection de la phase continue dans le canal de phase continue à l'aide du deuxième dispositif d'injection (20) à une pression ou à un débit déterminé de manière à former des gouttes de phase dispersée au point de jonction des deux canaux du dispositif,
- Mesure de la fréquence (f) et du volume (V) des gouttes de phase dispersée en aval du point de jonction,
- Détermination de la viscosité dynamique de la phase dispersée par la mise en oeuvre du procédé défini dans l'une des revendications 1 à 4.

**Fig. 1A**

**Fig. 1B**

*Fig. 2*

*Fig. 3*

Fig. 4

Fig. 5

Europäisches
Patentamt

European
Patent Office

Office européen
des brevets

**RAPPORT DE RECHERCHE EUROPEENNE**

Numéro de la demande

EP 17 19 5615

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | MICHAEL F. DELAMARRE ET AL: "Development of a Simple Droplet-Based Microfluidic Capillary Viscometer for Low-Viscosity Newtonian Fluids", ANALYTICAL CHEMISTRY, vol. 87, no. 9, 31 mars 2015 (2015-03-31), pages 4649-4657, XP055402556, US ISSN: 0003-2700, DOI: 10.1021/acs.analchem.5b00677 * figure 1 * * page 4650, colonne de gauche, alinéa 2 * * "Calibration"; page 4650 - page 4651 * * "Measuring and Controlling Shear Rates"; page 4651 * * "Droplet Generation and Measurment"; page 4651 - page 4652 * * "Shear Rate Operating Ranges and Control"; page 4654 * * "Conclusions"; page 4656 * | 1-12 | INV. G01N11/08 B01L3/00 |
| A | ----- Howard A Stone: "Introduction to Fluid Dynamics for Microfluidic Flows" In: "CMOS Biotechnology", 31 janvier 2007 (2007-01-31), Springer,, DE, XP055402928, ISBN: 978-0-387-36836-8 pages 5-30, DOI: https://doi.org/10.1007/978-0-387-68913-5_2, * page 14 - page 17 * ----- -/-- | 1-12 | |

DOMAINES TECHNIQUES
RECHERCHES (IPC)

G01N
B01L

Le présent rapport a été établi pour toutes les revendications

| Lieu de la recherche | Date d'achèvement de la recherche | Examinateur |
|---|---|---|
| La Haye | 1 mars 2018 | Lefortier, Stéphanie |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 17 19 5615

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | YUN DING ET AL: ""V-junction": a novel structure for high-speed generation of bespoke droplet flows", ANALYST, vol. 140, no. 2, 20 octobre 2014 (2014-10-20), pages 414-421, XP055402916, ISSN: 0003-2654, DOI: 10.1039/C4AN01730G * figure 3(c) * * page 416 - page 417 * ----- | 1-12 | |
| A | KWANG W. OH ET AL: "Design of pressure-driven microfluidic networks using electric circuit analogy", LAB ON A CHIP, vol. 12, no. 3, 16 décembre 2011 (2011-12-16), pages 515-545, XP055402933, ISSN: 1473-0197, DOI: 10.1039/C2LC20799K * page 517 - page 522 * ----- | 1-12 | |
| A | WO 2007/133710 A2 (RAINDANCE TECHNOLOGIES INC [US]; LINK DARREN R [US]; WEINER MICHAEL [U) 22 novembre 2007 (2007-11-22) * figure 1 * * alinéa [0021] * ----- | 1-12 | **DOMAINES TECHNIQUES RECHERCHES (IPC)** |
| A | ERIC LIVAK-DAHL ET AL: "Nanoliter droplet viscometer with additive-free operation", LAB ON A CHIP, vol. 13, no. 2, 7 novembre 2012 (2012-11-07), pages 297-301, XP055402564, ISSN: 1473-0197, DOI: 10.1039/C2LC41130J * abrégé; figure 1 * ----- | 1-12 | |

Le présent rapport a été établi pour toutes les revendications

| Lieu de la recherche | Date d'achèvement de la recherche | Examinateur |
|---|---|---|
| La Haye | 1 mars 2018 | Lefortier, Stéphanie |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 2 de 2

**ANNEXE AU RAPPORT DE RECHERCHE EUROPEENNE**
**RELATIF A LA DEMANDE DE BREVET EUROPEEN NO.**

EP 17 19 5615

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-03-2018

| Document brevet cité au rapport de recherche | Date de publication | Membre(s) de la famille de brevet(s) | Date de publication |
|---|---|---|---|
| WO 2007133710 A2 | 22-11-2007 | AT 540750 T | 15-01-2012 |
| | | EP 2021113 A2 | 11-02-2009 |
| | | EP 2047910 A2 | 15-04-2009 |
| | | EP 2481815 A1 | 01-08-2012 |
| | | EP 2530167 A1 | 05-12-2012 |
| | | EP 2530168 A1 | 05-12-2012 |
| | | EP 3031918 A1 | 15-06-2016 |
| | | JP 6023252 B2 | 09-11-2016 |
| | | JP 2010506136 A | 25-02-2010 |
| | | JP 2013015536 A | 24-01-2013 |
| | | JP 2015142586 A | 06-08-2015 |
| | | JP 2017006145 A | 12-01-2017 |
| | | US 2008003142 A1 | 03-01-2008 |
| | | US 2008014589 A1 | 17-01-2008 |
| | | US 2013090248 A1 | 11-04-2013 |
| | | US 2013183659 A1 | 18-07-2013 |
| | | US 2013210639 A1 | 15-08-2013 |
| | | US 2017304785 A1 | 26-10-2017 |
| | | WO 2007133710 A2 | 22-11-2007 |
| | | WO 2008063227 A2 | 29-05-2008 |

EPO FORM P0460

Pour tout renseignement concernant cette annexe : voir Journal Officiel de l'Office européen des brevets, No.12/82

EP 3 309 535 A1

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 7290441 B2

**Littérature non-brevet citée dans la description**

• **GUILLOT et al.** *Viscosimeter on a microfluidic chip,* 2006
• **DEGRÉ et al.** *Rheology of complex fluids by particle image velocimetry in microchannels,* 2006

• **NIE et al.** *Emulsification in a microfluidic flow-focusing device : effect of the viscosities of the liquids*